# EUROPEAN PATENT APPLICATION

(11) **EP 1 246 053 A1**
(43) Date of publication of application: **02.10.2002**
(21) Application number: 01410030.9
(22) Date of filing: 26.03.2001
(51) Int. Cl.: G06F 3/14, G09G 5/00, H04N 5/445

(54) **Communication module**

(71) Applicant: Hewlett Packard Company, a Delaware Corporation, Palo Alto, CA 94304 (US)
(72) Inventor: Drif, Dany, 73000 Chambery (FR); Puyo, Cecile, 38190 Bernin (FR)
(74) Representative: Lloyd, Richard Graham

(57) **Abstract**

A communication module for a computer display means, the module comprising a network interface, a screen interface and a controller, the module being operable to receive display information from said network interface and transmit the display information to the screen interface for display on the display means.

## Description

### Field of the Invention

This invention relates to a communication module for a computer display means.

### Background of the Invention

Conventionally, a personal computer (PC) is provided with a display means in the form of a visual display unit (VDU) of known type having a screen, together with a suitable interface to enable the computer to send display information to the VDU for display on the screen. When the computer is off or has failed in some manner, for example if the computer has crashed or hung, or has a defective video card or a mechanical failure in the connection between the computer and the screen, then no information from the computer can be displayed. Under these circumstances, it would not be possible to display, for example, maintenance data or repair advice or other useful information. It is known to provide a VDU with an on-screen display controller (OSD) which shows internal screen parameters such as brightness, contrast and the like, usually during adjustment of these parameters by the user, independently of any video signal received. Such OSD's are however not generally externally accessible, nor are such OSD's provided on all VDU's.

An aim of the invention is to reduce or overcome the above problems.

### Summary of the Invention

According to a first aspect of the invention we provide a communication module for a display means, the module comprising a network interface, a screen interface and a controller, the module being operable to receive display information from said network interface and transmit the display information to the screen interface for transmission to the display means.

In a first preferred alternative of the first aspect of the invention the module may comprise a video interface connectable to a video input of the display means.

In a second alternative of the first aspect of the invention, where the display means comprises an on-screen display controller (OSD), the screen interface may be connectable to the OSD.

In a third alternative of the first aspect of the invention, the module may comprise an on screen display controller of the display means.

In the first alternative, the module may comprise a computer display connection operable to receive display information from a computer.

The computer display connection may comprise a video input connectable to the video output of the computer to pass a computer video signal to the screen interface.

The module may be operable to combine display information received from the network interface and from the computer display connection and transmit the combined display information to the display screen.

The controller may comprise a HTML and/or XML interpreter operable to convert hypertext information received from the network interface and transmit display information to the screen interface.

The screen interface may comprise a digital-to-video converter.

In any alternative of the invention, the communication module may comprise a screen receiver interface operable to receive information from the display means.

The screen receiver interface may be operable to receive information from a touch screen.

According to a second aspect of the invention we provide a visual display unit comprising a screen and a module according to the first aspect of the invention.

The present invention thus permits a VDU to display information received over a network independently of a computer to which the VDU is connected.

### Brief Description of the Drawings

Embodiments of the invention will now be described by way of example only with reference to the accompanying drawings, wherein;
Figure 1 is a diagrammatic illustration of a module according to the present invention,
Figure 2 is a diagrammatic illustration of a computer and screen provided with a module according to a first preferred alternative embodiment of the present invention,
Figure 3 is a diagrammatic illustration of a computer and screen provided with a module according to a second alternative embodiment of the invention,
Figure 4 is a diagrammatic illustration of a computer and screen provided with a module according to a third alternative embodiment of the present invention, and
Figure 5 is a diagrammatic illustration in more detail of the module of the first alternative embodiment of the present invention.

### Detailed Description of the Preferred Embodiments

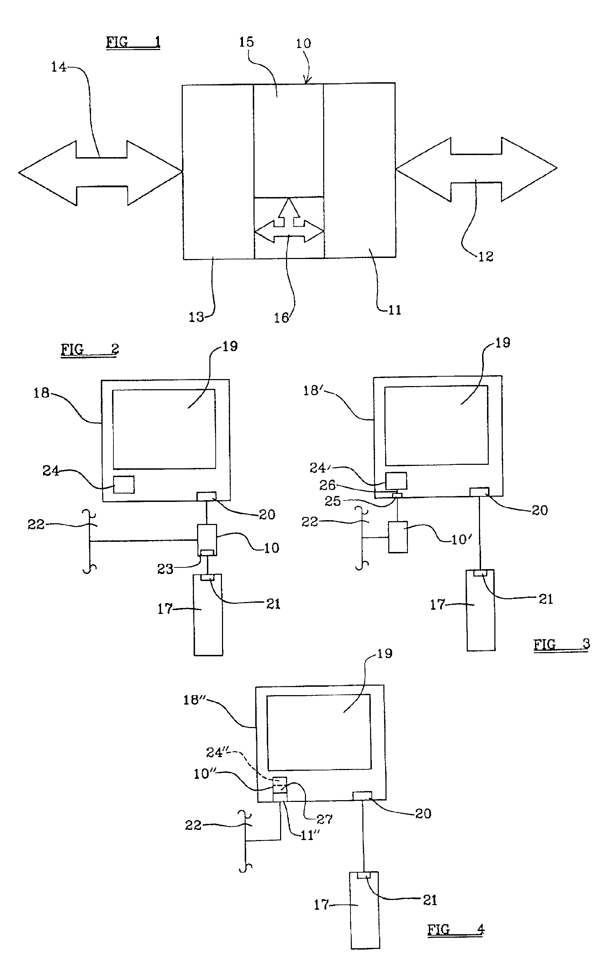

Referring to Figure 1, a communication module according to the present invention is generally indicated at 10. The module 10 comprises a network interface 11 operable to transmit and receive information via a network connection 12, a screen interface 13 operable to transmit and optionally receive information via a screen connection 14 and a controller 15 operable to receive information from and pass information to the network interface 11 and screen interface 13. The module 10 is provided with internal connections 16 to permit information to be passed between the network interface 11, screen interface 13 and controller 15.

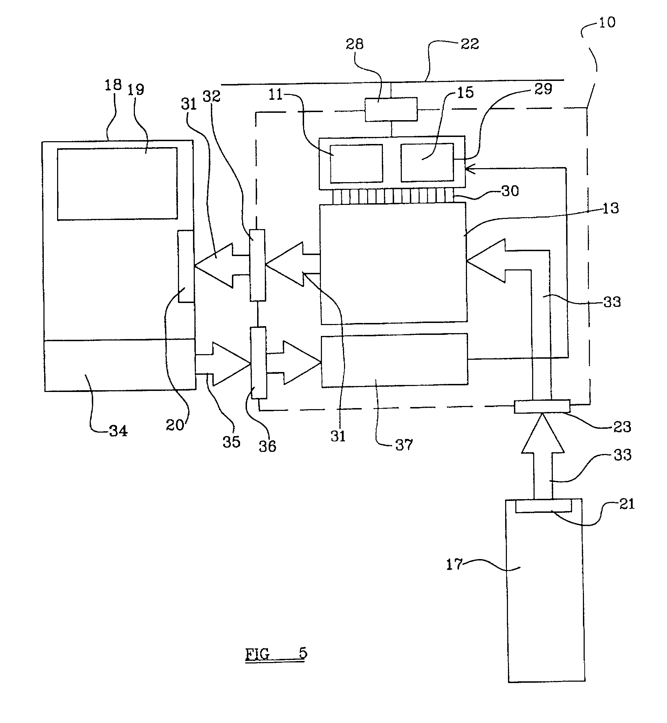

Referring now to Figures 2 to 4, three alternative embodiments of the present invention are illustrated. In Figures 2 to 4, a computer system is illustrated comprising a personal computer 17 provided with display means in the form of a visual display unit (VDU) 18 comprising a display screen 19. In the present example, the visual display unit 18 is provided with a video input 20 which is operable to receive a video signal from a video output 21 of the computer 17 in any desired form, for example VGA format or RGB synchro. A network is generally indicated at 22 and it is desired that display information from the network 22 be displayed on the screen 19.

Referring now to Figure 2, a preferred first alternative embodiment of the invention is illustrated. The module 10 is provided with a video input 23 connectable to the video output 21 of the computer 17. The module 10 is thus operable to receive video signals from the computer 17, as well as display information from the network 22. The controller 15 is then operable to combine the display information from the network and the video signal from the computer 17 and to send the combined display information to the video input 20 of the visual display unit 18.

This alternative thus permits a module 10 according to the present invention to be used with any standard monitor, and further allows the module 10 to access the video signal from the computer 17. The video signal from the computer 17 can then be transmitted over the network 22, for example to a further visual display unit for display purposes or for security or monitoring purposes or for any other desired reason. A disadvantage of this alternative is that a video interface is required in the module 10. The visual display unit 18 is provided with an on-screen display controller (OSD) 24 in the present example, but the OSD 24 is not used by the module 10 in this alternative and the module 10 may be used with a visual display unit 18 which is not provided with an OSD 24.

In a second alternative as shown in Figure 3, a module 10' is operable to address a suitably adapted OSD 24'. A modified visual display unit 18' is provided with an OSD port 25 and an OSD bus 26 to connect the OSD 24' to the OSD port 25. The module 10' is operable in the same way as the module 10 to receive display information from the network 22. The screen interface 13 of the module 10' is connected to the OSD port 25 and is operable to send information to the OSD 24' to display the information on the screen 19. The OSD 24' will also be operable to transmit information via the port 25 to the module 10'. This alternative provides a module 10' of lower complexity than the module 10 since a simpler screen interface 13 is required. A disadvantage is that only text or static graphics can be displayed by the OSD 24'. A further disadvantage is that it is necessary to provide a VDU 18' with a modified OSD 24' and an OSD port 25 and an OSD bus 26 and so a module 10' would not be suitable for use with a standard visual display unit 18.

In a third alternative of the invention as shown in Figure 4, a combined OSD and module 10" is provided integrated into a visual display unit 18". The module 10" comprises elements operable to provide OSD functions, generally indicated at 24" and to provide the screen interface and controller functions of the module 10'', generally indicated at 27. In this example, a network interface 11'' is provided as a separate "plug-in" module to enable the module 10" to be connected to the network 22 with any appropriate interface or protocol as desired. Again, this alternative only permits the display of static text and graphics and is not compatible with existing standard display units. However, the video complexity of the module 10" is less than that of the module 10 and the module 10" can be connected to the network 22 via a user-selected interface 11''.

The first alternative as shown in Figure 2 will now be discussed in more detail with reference with Figure 5. Where the same features occur in Figures 1 and 2, the corresponding reference numerals have also been used in Figure 5.

As seen in Figure 5, the module 10 in the present example is provided with a suitable network connection 28 to connect the network 22 to the network interface 11. The network interface 11 may comprise any suitable interface. In the example of Figure 5, the network interface 11 and the controller 15 are provided as part of a common unit 29. The controller 15 comprises a HTML and/or XML interpreter, to receive hypertext display information from the network interface 11 and to convert it into a digital signal for transmission over a bus 30 to the screen interface 13. In the present example, the screen interface 13 comprises a digital-to-video converter and a video output 32. The digital-to-video convertor generates a video signal 31 which is passed to the video output 32 connected to the video input 20 of the VDU 18.

To provide a computer display connection, a computer video signal 33 is received at the computer video input 23 connected to the computer video output 21 and is similarly transmitted to the screen interface 13. The computer video signal 33 and the digital display information transmitted via the bus 30 may be combined by the screen interface 13 in any desired manner. It would be envisaged that the for most applications, it would be desirable that the display information received from the network 22 would overlie and mask the computer video signal 33. It will be apparent that display information may be received from the computer 17 by any other suitable analogue or digital connection as desired, provided the module 10 comprises a suitable computer display connection.

The visual display unit 18 in the present example also comprises a transmission element 34. The transmission element 34 may for example comprise a touch screen, or may comprise an element to operable transmit any other information as desired from the VDU 18. Information 35 transmitted by the transmission element 34 is received at an input 36 and passed to a screen receiver module 37. In this example, the screen receiver module 37 passes the information to the controller 15, which can then pass the information to the network interface 11 for transmission over the network 22. The transmitted information 35 may of course also be passed to the screen interface 13 for display on the screen 19 if visual feedback is desired.

The present invention thus permits the display on a VDU screen of information received from a network independently of the computer to which the VDU is attached. Information can also be preferably received from the screen and either transmitted over the network or displayed on the screen to a user.

Many applications of the invention may be envisaged. For example, when the computer is out of order, network information, repair advice or any other information may still be displayed on the screen. General announcements or advertisements may be displayed to all users of a network via their screens without interrupting the operation of the users' computers. The information transmitted over the network may include text or graphics or even video information. The communication module could include additional features such as authentication, for example requiring a password input from the user or authenticating the information received from the network, or an encryption capability to receive and transmit encrypted information via the network 22. Where video information is transmitted over the network 22, the module 10 could be provided with video compression and/or decompression capabilities. The capabilities of the module can be determined by the required responsiveness, and functions of the module, and the network interface, screen interface and controller selected accordingly.

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A communication module for a display means (18), the module (10) comprising a network interface (11), a screen interface (13) and a controller (15), the module (10) being operable to receive display information from said network interface (11) and transmit the display information to the screen interface for transmission to the display means (18).

2. A module according to claim 1 wherein the screen interface (13) comprises a video output connectable to a video input of the display means (18).

3. A communication module according to claim 1 wherein the screen interface (13) is connectable to an on-screen display controller (OSD) (24) of the display means (18).

4. A module according to claim 1 wherein the module (10) comprises an on-screen display controller (OSD) 24 display of the display means (18).

5. A module according to claim 2 wherein the module (10) comprises a computer display connection operable to receive display information from a computer (17).

6. A module according to claim 5 wherein the computer display connection comprises a video input connectable to the video output of the computer to pass a computer video signal to the screen interface (13).

7. A communication module according to claim 5 or claim 6 wherein the module (10) is operable to combine display information received from the network interface (11) and from the computer display connection and display the combined display information on the screen (19).

8. A module according to any one of the preceding claims wherein the controller (15) comprises an HTML and/or XML interpreter operable to convert hypertext information received from the network interface (22) and transmit display information to the screen interface (13).

9. A module according to any one of the preceding claims wherein the screen interface (13) comprises a digital-to-video converter.

10. A module according to any one of the preceding claims further comprising a screen receiver module (37) operable to receive information from the display means (18).

11. A module according to claim 10 wherein the screen receiver module (37) is operable to receive information from a touch screen.

12. A visual display unit (18) comprising a screen (19) and a communication module (10) according to any one of the preceding claims.
